# EUROPÄISCHE PATENTANMELDUNG

(11) **EP 2 564 737 A1**
(43) Veröffentlichungstag der Anmeldung: **06.03.2013**
(21) Anmeldenummer: 12181879.3
(22) Anmeldetag: 27.08.2012
(51) Int. Cl.: A47J 31/44

(54) **Wassertank für ein Haushaltsgerät**

(30) Priorität: 30.08.2011 DE 102011081839
(71) Anmelder: BSH Bosch und Siemens Hausgeräte GmbH, 81739 München (DE)
(72) Erfinder: Luippold, Gregor, 82031 Grünwald (DE)

(57) **Zusammenfassung**

Die vorliegende Erfindung betrifft einen Wassertank für ein Haushaltsgerät, der dadurch gekennzeichnet ist, dass zumindest eine Tankfläche zumindest bereichsweise eine horizontal geriffelte Struktur aufweist.

## Beschreibung

Die Erfindung betrifft einen Wassertank für ein Haushaltsgerät.

Wassertanks für Haushaltsgeräte, insbesondere für Multigetränkesysteme, Kaffee-Pad-Maschinen, Kaffeevollautomaten, oder Filterkaffeemaschinen sind in der Regel abnehmbare, Behältnisse, die neben einem Deckel gegebenenfalls einen Füllstandsmagneten und eine Aufnahmevorrichtung für einen Wasserfiltereinsatz auf weisen.

Bevorzugt sind die Wassertanks aus transparenten Kunststoffen, wie beispielsweise aus Styrol-Acrylnitril (SAN) hergestellt. Ein in einem transparenten Wassertank aufgenommenes Wasser vermittelt einem Kunden ein angenehmes Gefühl der Frische, Sauberkeit und Reinheit.

Nachteilig an den bekannten Wassertanks aus transparenten Kunststoffen ist, dass diese in der Regel nicht Spülmaschinen geeignet sind, und daher nach Gebrauch manuell getrocknet werden müssen damit nicht verbleibende Wassertropfen unschöne Kalkflecken hinterlassen. Zudem können sich schon nach kurzer Standzeit Kalkränder an der jeweiligen Wasserstandskante bilden.

Da sich die Lage der Wasserstandskante durch Nachfüllen, Verdunstung und/oder Getränkebezüge ständig ändert, ist nach einer bestimmten Zeit der Wassertank mit einer Vielzahl von horizontal angeordneten Kalkrändern beaufschlagt. Dies ist nicht nur aus ästhetischen Gesichtspunkten zu vermeiden; mit fortschreitender Verkalkung kann der Wasserstand im Tank immer schlechter von einer Bedienperson abgelesen werden.

Eine bekannte Möglichkeit das Ablaufen von Wassertropfen zu unterstützen ist eine sog. Lotuseffektbeschichtung. Da derartige Beschichtungen jedoch weder lebensmitteltauglich noch dauerhaft haltbar sind, ist dessen Einsatz in einem Wassertank für ein Haushaltsgerät derzeit nicht angezeigt.

Aufgabe der Erfindung ist es, einen Wassertank zur Verfügung zu stellen bei dem der Wasserstand im Tank jederzeit gut abzulesen ist.

Die Lösung dieser Aufgabe ergibt sich für einen Wassertank für ein Haushaltsgerät erfindungsgemäß dadurch, dass zumindest eine Tankfläche zumindest bereichsweise eine horizontal geriffelte Struktur aufweist. Eine Bedienperson erkennt in einer erfindungsgemäß geriffelten Struktur eine Vielzahl an horizontal angeordneten Linien bzw. Rändern, wobei die Wasserstandskante durch Lichtbrechung deutlich als dunkle Linie hervortritt.

Gegebenenfalls an der Innenwand des Wassertanks vorhandene horizontal angeordnete Kalkränder sind in Abhängigkeit der erfindungsgemäß geriffelten Struktur entweder nicht oder nicht als solche erkennbar.

Handelt es sich bei der geriffelten Struktur um eine Struktur mit einer groben Riffelung, d.h. die rillenförmigen Vertiefungen sind größer als etwa 1 mm, dann sind Kalkränder nicht mehr erkennbar. Ist die Riffelung eher fein, d.h. unter etwa 1 mm, kann von einer Bedienperson nicht mehr zwischen einem Kalkrand und einem Riffel unterschieden werden.

In einer bevorzugten Ausführungsform ist die horizontal geriffelte Struktur durch Prismen gebildet. Die horizontale Anordnung der einzelnen Prismen führt zu einer optischen Brechung der horizontalen Lienenstruktur durch Kalkränder in dem Wassertank.

Die geriffelte Struktur kann auf der Oberfläche des Tanks aufgebracht, beispielsweise aufgeklebt sein. Bevorzugt ist die Struktur bereits im Spritzgusswerkzeug ausgebildet, dergestalt, dass ein erfindungsgemäßer Wassertank mit einer, bevorzugt auf der Tankaußenseite, geriffelten Struktur im Spritzgussverfahren herstellbar ist.

Denkbar ist es auch, die geriffelte Struktur zwischen zwei Oberflächen einzubringen. Dies hat den Vorteil, dass die ebene Tankinnenfläche und die ebene Tankaußenfläche einfacher zu reinigen sind.

Abhängig von der jeweiligen Ausführungsform des Haushaltsgeräts ist gegebenenfalls nur ein bestimmter Bereich des Wassertanks sichtbar, beispielsweise um den Wasserstand visuell überprüfen zu können oder um dem Gerät eine bestimmtes Design zu verleihen. Bevorzugt ist die geriffelte Struktur nur in dem sichtbaren Bereich des Tanks vorgesehen. Dies hat den Vorteil, dass durch die restlichen, vorzugsweise transparenten Bereiche, auch bei schlechten Lichtverhältnissen genügend Licht einfallen kann, um den Wasserstand durch die horizontal geriffelte Struktur zuverlässig ablesen zu können.

## Patentansprüche

1. Wassertank für ein Haushaltsgerät, **dadurch gekennzeichnet, dass** zumindest eine Tankfläche zumindest bereichsweise eine horizontal geriffelte Struktur aufweist.

2. Wassertank nach Anspruch 1, **dadurch gekennzeichnet, dass** die horizontal geriffelte Struktur durch Prismen gebildet ist.

3. Wassertank nach Anspruch 1 oder 2, **dadurch gekennzeichnet, dass** die geriffelte Struktur auf einer Oberfläche des Wassertanks ausgebildet ist.

4. Wassertank nach Anspruch 1, 2 oder 3, **dadurch gekennzeichnet, dass** die geriffelte Struktur auf einer Außenfläche des Wassertanks ausgebildet ist.

5. Haushaltsgerät, insbesondere Multigetränkesystem, Kaffee-Pad-Maschine, Kaffeevollautomat oder Filterkaffeemaschine, aufweisend einen Wassertank nach einem der Ansprüche 1 bis 4.
